# FASCICULE DE BREVET EUROPEEN

(11) **EP 3 044 521 B1**
(45) Date de publication et mention de la délivrance du brevet: **13.09.2017**
(21) Numéro de dépôt: 14752909.3
(22) Date de dépôt: 29.07.2014
(51) Int. Cl.: F25B 15/02, F25B 27/00, F25B 43/00

(54) **SYSTÈME DE PRODUCTION D'EAU CHAUDE SANITAIRE ET DE RAFRAICHISSEMENT PAR ÉNERGIE SOLAIRE**
SOLARENERGIEANLAGE ZUR BRAUCHWASSERBEREITUNG UND KÜHLUNG
SOLAR ENERGY SYSTEM FOR DOMESTIC HOT WATER PRODUCTION AND COOLING

(30) Priorité: 13.09.2013 FR 1358809
(43) Date de publication de la demande: 20.07.2016
(73) Titulaire: Commissariat à l'Énergie Atomique et aux Énergies Alternatives, 75015 Paris (FR)
(72) Inventeur: BOUDEHENN, François, F-07190 Saint Sauveur de Montagut (FR); PAPILLON, Philippe, F-73000 Chambery (FR)
(74) Mandataire: Cabinet Laurent & Charras
(86) Numéro de dépôt international: PCT/FR2014/051970
(87) Numéro de publication internationale: WO 2015/036668

(56) Documents cités:
- DE-A1- 10 039 159
- DE-B3-102010 017 674
- US-A- 4 429 545
- US-A1- 2003 041 608

## Description

### DOMAINE DE L'INVENTION

L'invention a trait au domaine de la production d'eau chaude sanitaire et rafraichissement par énergie solaire.

### ETAT DE LA TECHNIQUE

Un chauffe-eau solaire destiné à produire de l'eau chaude à usage domestique, ou eau « sanitaire », comporte usuellement un capteur solaire et un ballon de stockage d'un liquide à chauffer, le capteur solaire transportant la puissance thermique qu'il reçoit du soleil vers le ballon de stockage.

Par exemple, un capteur solaire comporte plusieurs caloducs, un caloduc étant un dispositif de transfert de chaleur qui comprend une enceinte étanche, c'est-à-dire ne laissant passer ni les liquides ni les gaz, classiquement réalisée sous la forme d'un tube ou plusieurs tubes coaxiaux, qui contient le fluide caloporteur, dont la phase liquide est en équilibre avec la phase vapeur, également nommé « système diphasique ». Dans le cadre d'un capteur solaire, l'enceinte se compose :
- d'un évaporateur, localisé à une extrémité de celle-ci et destiné à être chauffé par le soleil,
- d'un condenseur, localisé à l'autre extrémité de l'enceinte et destiné à être refroidi directement ou indirectement par le liquide emmagasiné dans le ballon de stockage, et
- d'une zone intermédiaire dite « adiabatique », localisée entre l'évaporateur et le condenseur.

Sous l'effet de la chaleur du soleil, le liquide contenu dans l'évaporateur se vaporise et la vapeur ainsi produite migre vers le condenseur dans lequel elle se condense en transférant de la chaleur au liquide du ballon de stockage. Le liquide condensé retourne alors vers l'évaporateur pour un nouveau cycle d'évaporation.

Il est connu d'utiliser un chauffe-eau solaire seul, mais également en coopération avec une machine frigorifique à absorption solaire pour la production de froid, ce type de machine fonctionnant selon un cycle thermodynamique d'absorption, et de séparation d'un fluide frigorigène et d'un absorbant. Des couplages entre ces deux types de dispositif ont été envisagés pour disposer d'un unique système permettant à la fois le chauffage d'eau sanitaire et la mise en oeuvre d'une fonction de rafraichissement, par exemple de climatisation. On peut par exemple citer les documents US 4 738 305, KR 2010/05326, KR 100585517 et JP 59035741 qui décrivent des couplages spécifiques.

Toutefois quelle que soit l'utilisation du chauffe-eau solaire, pour des raisons d'efficacité thermique, les capteurs solaires sont prévus pour capter et emmagasiner un maximum de chaleur. Ainsi par exemple, l'évaporateur d'un caloduc est enfermé dans plusieurs couches de matériaux transparents aux rayonnements solaires entre lesquelles du vide est formé. Le rayonnement solaire se retrouve ainsi piégé dans le caloduc et la chaleur véhiculée par le rayonnement solaire incident est transférée sensiblement en totalité au liquide présent dans l'évaporateur. Des températures supérieures à 250 °C peuvent ainsi être atteintes dans l'évaporateur, et ce même pour des ensoleillements faibles.

Toutefois, les fluides caloporteurs usuellement utilisés pour les capteurs solaires de type caloduc supportent difficilement les fortes températures sur une longue période sans se dégrader. Notamment, le fluide du circuit primaire s'oxyde et perd ses capacités de transport de chaleur. Sans précautions particulières, on observe ainsi une diminution de l'efficacité des caloducs, et donc du capteur solaire dans son ensemble, parfois au bout de quelques mois, alors que les capteurs solaires sont usuellement destinés à fonctionner sur une période de 20 ans. De même, des températures excessives peuvent fragiliser les matériaux constitutifs du capteur solaire et du ballon de stockage. D'une manière générale, on observe qu'une surchauffe répétée d'un capteur solaire augmente le risque de dysfonctionnement du chauffe-eau solaire.

DE 10 2010 017 674 B3 dévoile un système de chauffage selon le préambule de la revendication 1.

### EXPOSE DE L'INVENTION

Le but de la présente invention est de proposer un système couplant un chauffe-eau solaire et une machine à absorption qui protège le capteur solaire du chauffe-eau des surchauffes tout en maximisant l'emploi de l'énergie solaire incidente sur le capteur solaire.

A cet effet, l'invention a pour objet un système de chauffage et de rafraîchissement par énergie solaire, comportant :
▪ un chauffe-eau solaire comprenant :
   ∘ un capteur solaire ; et
   ∘ un ballon de stockage en couplage thermique avec le capteur solaire pour transférer de l'énergie solaire captée par le capteur solaire à un liquide présent dans le ballon de stockage ;
▪ une machine à absorption comprenant :
   ∘ un évaporateur contenant un fluide frigorigène et apte à être en couplage thermique avec une première source chaude pour refroidir celle-ci ;
   ∘ un absorbeur, en communication avec l'évaporateur pour recevoir de celui-ci du fluide frigorigène, et pour refroidir le fluide frigorigène reçu en l'absorbant dans une solution contenant un absorbant, de sorte à former une solution d'absorbant enrichie en fluide frigorigène, dite solution enrichie;
   ∘ un désorbeur apte à être en couplage thermique avec une seconde source chaude, le désorbeur étant en communication avec l'absorbeur pour recevoir de celui-ci de la solution d'absorbant enrichie en fluide frigorigène, et pour séparer ladite solution en désorbant du fluide frigorigène au moyen de la seconde source chaude, et en communication avec l'absorbeur pour fournir à celui-ci une solution d'absorbant appauvrie en fluide frigorigène ; et
   ∘ un condenseur apte à être en couplage thermique avec une source froide, le condenseur étant en communication avec le désorbeur pour recevoir de celui-ci du fluide frigorigène désorbé, et pour condenser le fluide frigorigène reçu au moyen de la source froide, et en communication avec l'évaporateur pour fournir à celui-ci du fluide frigorigène condensé.
Le désorbeur comprend :
▪ un échangeur en communication avec l'absorbeur pour recevoir de celui-ci de la solution d'absorbant enrichie en fluide frigorigène, l'échangeur étant logé dans le ballon de stockage, le ballon de stockage formant la seconde source chaude ; et
▪ un séparateur liquide/vapeur en communication :
   ∘ avec l'échangeur pour recevoir de celui-ci la solution d'absorbant enrichie en fluide frigorigène chauffée dans l'échangeur, et pour séparer la solution enrichie entre d'une part une solution d'absorbant appauvrie en fluide frigorigène et d'autre part du fluide frigorigène;
   ∘ avec l'absorbeur pour fournir à celui-ci de la solution d'absorbant appauvrie en fluide frigorigène; et
   ∘ avec le condenseur pour fournir à celui-ci du fluide frigorigène.

En d'autres termes, vu du capteur solaire, la source froide de celui-ci est donc composée du liquide contenu dans le ballon de stockage, et donc de l'eau sanitaire à chauffer, mais également du mélange d'absorbant et de fluide frigorigène à chauffer de la machine à absorption. Pour éviter la surchauffe du capteur solaire, il suffit alors de mettre en marche cette dernière. En outre, on observe que les périodes de surchauffe du capteur solaire correspondent généralement aux périodes de demande de rafraichissement. Aussi, une utilisation classique de la machine à absorption, par exemple pour la climatisation d'une pièce, évite la surchauffe du capteur solaire. L'utilisation de l'énergie solaire captée est donc optimisée. Lors des périodes de l'année les plus froides, l'énergie solaire peut être utilisée uniquement pour chauffer l'eau sanitaire, et lors des périodes plus chaudes, l'énergie excédentaire est utilisée pour produire du froid. De plus, il est possible de surdimensionner l'installation, et donc d'augmenter le taux de couverture solaire, sans pour autant induire des surchauffes excessives.

Selon un mode de réalisation, l'échangeur comprend un conduit logé dans le ballon de stockage du chauffe-eau et dans lequel circule de la solution d'absorbant enrichie en fluide frigorigène. Il n'est ainsi pas nécessaire de modifier le capteur solaire. Tout type de capteur solaire peut ainsi être utilisé.

Notamment, le chauffe-eau comporte des conduits pour la circulation de fluide entre le capteur solaire et le ballon de stockage et des conduits pour la circulation entre le ballon de stockage et un circuit de distribution d'eau sanitaire, et ledit conduit de l'échangeur est séparé desdits conduits du chauffe-eau. En d'autres termes, le chauffe-eau est modifié uniquement pour prévoir un conduit qui traverse le ballon de stockage. Les autres éléments du chauffe-eau peuvent ainsi être conservés de sorte que tout type de chauffe-eau peut être utilisé moyennant cette modification.

En particulier, le capteur solaire comporte un conduit formant un circuit fermé dans lequel circule un fluide caloporteur, une portion du conduit du capteur solaire étant logée dans le ballon de stockage, le conduit de l'échangeur logé dans le ballon de stockage est constitué d'un tube, et la portion du conduit du capteur solaire logée dans le ballon de stockage est constituée d'un tube coaxial au tube du conduit de l'échangeur logé dans le ballon de stockage. Dans cette configuration, la solution du désorbeur circule dans un tube interne et le fluide caloporteur du capteur solaire circuit dans un tube externe au tube du désorbeur. En cas de rupture du tube du désorbeur, la solution du désorbeur se mêle au fluide du capteur solaire et non pas au liquide contenu dans le ballon de stockage, ce qui permet donc de protéger ce dernier, notamment lorsque ce dernier est constitué de l'eau sanitaire à chauffer.

Avantageusement, le conduit de l'échangeur est un tube à paroi double peau, par exemple un tube fabriqué par la société Wieland-Werke AG sous la référence « WKE » ou « WKC ». Un tel conduit est notamment avantageux lorsqu'il est plongé dans le ballon de stockage et que ce dernier contient l'eau sanitaire à chauffer, une paroi double peau limitant en effet le risque que la solution contenue dans le désorbeur ne se mêle à l'eau sanitaire en cas de rupture du conduit.

Selon un mode de réalisation, la machine à absorption comprend une pompe en communication avec l'absorbeur et l'échangeur pour pomper de la solution d'absorbant enrichie en fluide frigorigène dans l'absorbeur et fournir la solution pompée à l'échangeur.

Selon un mode de réalisation, le séparateur liquide/vapeur est agencée à proximité du ballon de stockage du chauffe-eau, et comporte une entrée raccordée à l'absorbeur et deux sorties, respectivement raccordées au condenseur et à l'échangeur. La sortie raccordée au condenseur est en particulier disposée au-dessus de la sortie raccordée à l'échangeur afin de permettre une séparation liquide/vapeur par gravité.

Selon un mode de réalisation, la machine à absorption comprend un détendeur entre séparateur liquide/vapeur et l'absorbeur.

Selon un mode de réalisation, le ballon de stockage, le désorbeur, l'absorbeur, et le condenseur sont logés dans un boitier, ce qui permet d'installer simplement le système, par exemple sur le mur d'une habitation.

Selon un mode de réalisation, le système comprend des moyens de commande de la machine à absorption comportant un capteur de température pour mesurer la température à l'intérieur du ballon de stockage et une unité de commande de la machine à absorption raccordée audit capteur, l'unité de commande activant la machine à absorption uniquement si la température dans le ballon est supérieure à une température de seuil prédéterminée, en particulier une température de 75 °C.

### BREVE DESCRIPTION DES FIGURES

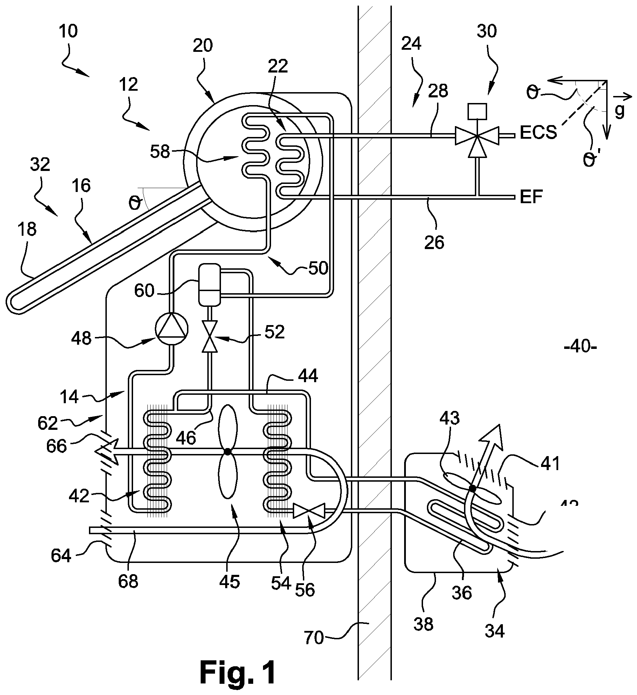

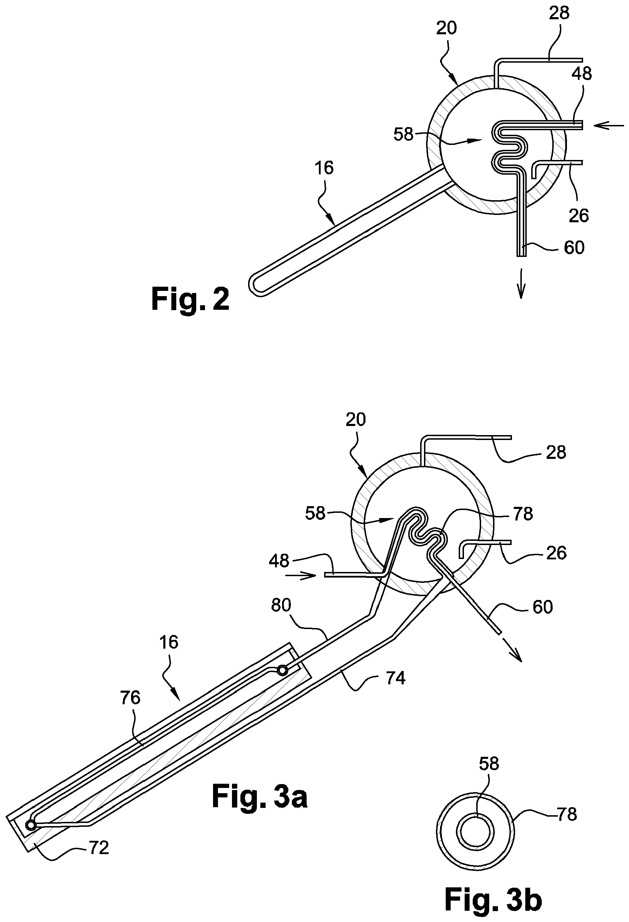

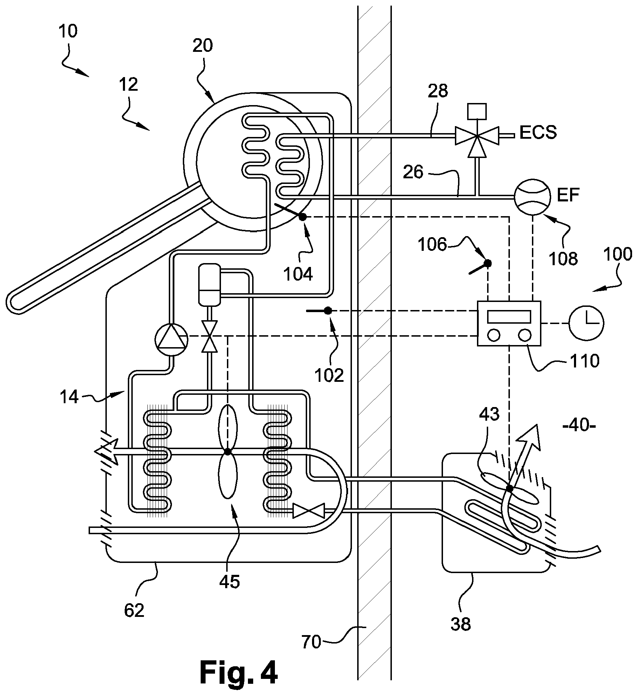

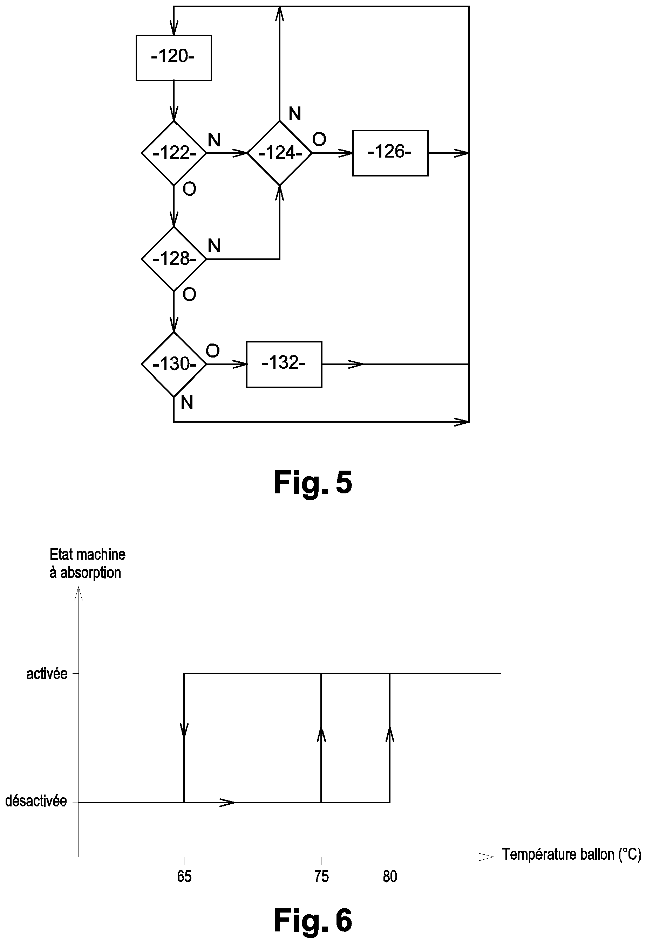

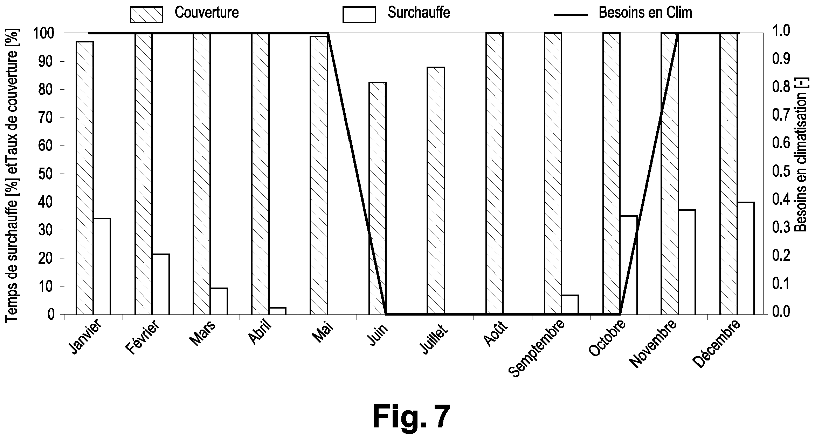

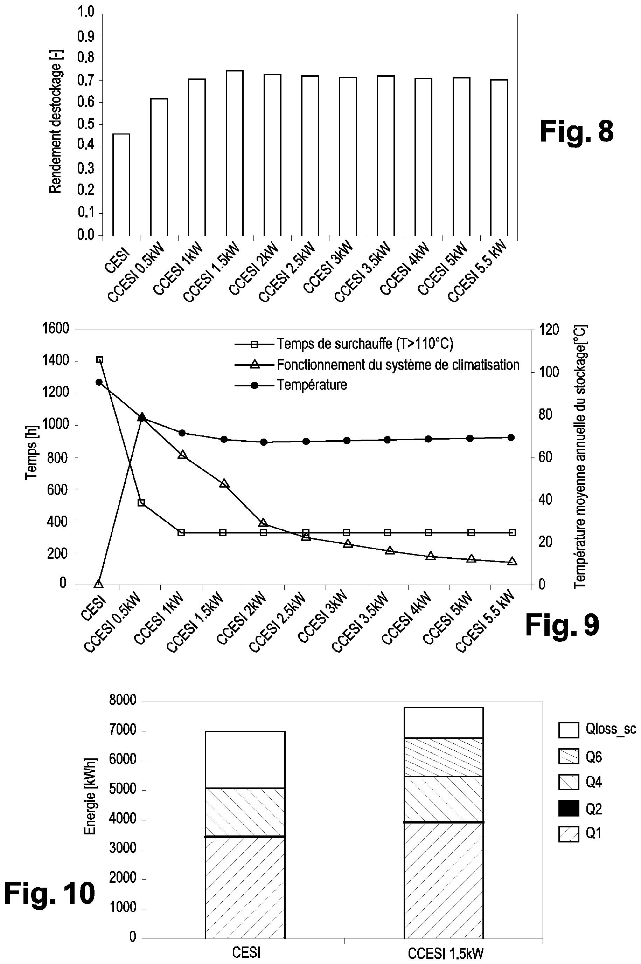

L'invention sera mieux comprise à la lecture de la description qui va suivre, donnée uniquement à titre d'exemple, et réalisée en relation avec les dessins annexés, dans lesquels :
▪ la figure 1 est une vue schématique d'un système selon un premier mode de réalisation de l'invention ;
▪ les figures 2 et 3 sont des vues schématiques illustrant d'autres modes de réalisation de l'invention au niveau de l'intégration du désorbeur ;
▪ la figure 4 est une vue schématique illustrant un système de commande selon l'invention ;
▪ la figure 5 est un organigramme illustrant un procédé mis en oeuvre par le système de commande ;
▪ la figure 6 est une hystérésis de commande en température de la machine à absorption du système selon l'invention ;
▪ la figure 7 est un tracé illustrant le taux de couverture et le taux de surchauffe d'un chauffe-eau de l'état de la technique et le besoin en climatisation d'une habitation ;
▪ la figure 8 est un tracé illustrant les rendements de stockage du chauffe-eau de l'état de la technique et de systèmes selon l'invention ;
▪ la figure 9 est un tracé illustrant le temps de surchauffe du capteur solaire et la température dans le ballon de stockage du chauffe-eau de l'état de la technique et des systèmes selon l'invention, ainsi que le temps de fonctionnement de la machine à absorption desdits système ; et
▪ la figure 10 est un tracé illustrant le bilan énergétique du chauffe-eau de l'état de la technique et de l'un des systèmes selon l'invention équipé d'une machine à absorption de 1,5 kW de puissance frigorifique.

### DESCRIPTION DETAILLEE DE L'INVENTION

Sur la figure 1, un système **10** selon un premier mode de réalisation de l'invention comporte un chauffe-eau solaire **12** et une machine frigorifique à absorption **14** destinée par exemple au chauffage de l'eau sanitaire d'une habitation et à la climatisation de celle-ci.

Le chauffe-eau solaire **12** comporte :
▪ un capteur solaire **16,** constitué par exemple de plusieurs thermosiphons tubulaires **18,** illustrés ici en coupe, inclinés d'un angle θ par rapport à l'horizontale, ou de manière équivalent d'un angle θ' par rapport à la direction de la gravité g, l'angle θ étant compris par exemple entre 0 et 30°.
▪ un ballon de stockage **20** contenant un fluide caloporteur, par exemple de l'eau ou de l'eau glycolée, et dans lequel débouche la partie supérieure des thermosiphons du capteur solaire **16 ;** et
▪ un échangeur **22** de production d'eau chaude sanitaire, plongé dans le fluide caloporteur contenu dans le ballon de stockage **20** et raccordé à un circuit de distribution d'eau chaude sanitaire **24,** notamment un conduit **26** pour acheminer dans l'échangeur **22** de l'eau froide sanitaire à chauffer et un conduit **28** pour distribuer l'eau chaude sanitaire depuis l'échangeur **22.** Un mitigeur thermostatique **30,** raccordé aux circuits **26** et **28,** peut être prévu pour régler la température de l'eau sanitaire distribuée dans l'habitation.

En fonctionnement, l'eau froide contenue dans le ballon de stockage **20** descend dans le capteur solaire **16** où elle est réchauffée par le rayonnement solaire **32,** l'eau chaude remontant ensuite dans le ballon de stockage **20.** L'eau chaude contenue dans le ballon **20** réchauffe alors l'eau sanitaire circulant dans l'échangeur **22.** Le fonctionnement d'un tel chauffe-eau solaire est classique.

Dans ce premier mode de réalisation, tout type de chauffe-eau solaire peut convenir, notamment des chauffe-eaux solaires comprenant des capteurs solaires sous vide, des capteurs « plan simple », des capteurs à double vitrage, des capteurs « double peau », des capteurs sous vide diphasique de type caloduc, etc. Des capteurs solaires particuliers peuvent cependant être prévus en fonction d'un besoin de sécurité, comme cela sera décrit ci-après. De même, le ballon de stockage **20** est ici représenté en position horizontale. Bien entendu le ballon peut être positionné verticalement.

La machine à absorption **14** comporte quant à elle :
▪ un évaporateur **34** comprenant un conduit **36,** par exemple sous la forme d'un serpentin ou d'un tube à ailette, dans lequel circule un fluide frigorigène liquide à basse pression, comme par exemple de l'ammoniac (NH₃) ou de eau (H₂O). L'échangeur est par exemple logé dans un boitier **38** installé dans une pièce **40** de l'habitation à rafraichir, le boitier comprenant des grilles **41** et un ventilateur pilotable **43** pour faire circuler l'air de la pièce **40** sur l'évaporateur **34.** Le fluide frigorigène circulant dans l'évaporateur **34** prélève de la chaleur à la pièce **40,** notamment par évaporation, rafraichissant de ce fait la pièce **40 ;**
▪ un absorbeur **42,** raccordé à la sortie de l'évaporateur **34** par un conduit **44** et recevant de celui-ci le fluide frigorigène évaporé. L'absorbeur **42** est en outre raccordé à un conduit **46** pour recevoir une solution concentrée en absorbant, l'absorbant étant par exemple de l'eau (H₂O), du bromure de lithium (LiBr) ou du chlorure de lithium (LiCl) et pour mélanger cette solution avec le fluide frigorigène. Le fluide frigorigène évaporé est ainsi absorbé par ladite solution et est donc refroidi. Une solution d'absorbant enrichie en fluide frigorigène est ainsi obtenue ;
▪ un dispositif de refroidissement de l'absorbeur **42,** pour évacuer la chaleur latente d'absorption et refroidir le mélange d'absorbant et de fluide frigorigène. Par exemple le dispositif est un dispositif de refroidissement du type liquide/air comprenant un ventilateur pilotable **45,** l'absorbeur **42** comprenant par exemple un serpentin pour maximiser la surface de refroidissement ;
▪ une pompe à solution pilotable **48** raccordée en sortie de l'absorbeur **42** pour pomper de la solution et pour fournir une solution sous haute pression ;
▪ un désorbeur **50,** également désigné sous le terme de « générateur » raccordé en sortie de la pompe **48** pour recevoir la solution pompée sous haute pression. Le désorbeur **50,** décrit ci-après plus en détail, est en couplage thermique avec une source chaude, ici le chauffe-eau solaire **12,** pour séparer la solution d'absorbant et de fluide frigorigène en faisant désorber le fluide frigorigène par chauffage et ainsi obtenir d'une part, une solution concentrée en absorbant, ou de manière équivalent ou solution appauvrie en liquide frigorigène, et d'autre part, du fluide frigorigène sous forme gazeuse ;
▪ un détendeur de solution **52,** raccordé en sortie du désorbeur **50** pour recevoir de celui-ci la solution concentrée en absorbant et pour abaisser la pression de la solution concentrée. Le détendeur **52** est agencé au-dessus de l'absorbeur **42** et raccordé au conduit **46** pour fournir à l'absorbeur **42** la solution qui est mélangée avec le fluide frigorigène en provenance de l'évaporateur **34 ;**
▪ un condenseur **54,** raccordé en sortie du désorbeur **50,** pour recevoir de celui-ci le fluide frigorigène gazeux et pour condenser le fluide frigorigène reçu. La condensation du fluide frigorigène est obtenue par refroidissement, par exemple au moyen du dispositif de refroidissement utilisé pour refroidir l'absorbeur **42,** le condenseur prenant avantageusement la forme d'un serpentin agencée au même niveau que le serpentin de l'absorbeur **42** en face des pâles du ventilateur pilotable **45;** et
▪ un détendeur de fluide frigorigène **56,** raccordé en sortie du condenseur **54,** pour recevoir le fluide frigorigène liquide de celui-ci et pour abaisser la pression du fluide frigorigène reçu, et raccordé en entrée de l'évaporateur **34** pour fournir à celui-ci le fluide frigorigène liquide à basse pression.

L'agencement et le fonctionnement d'une machine à absorption sont bien connus et ne seront pas détaillés plus en détail par la suite. On notera que tout type de machine à absorption peut convenir moyennant la configuration particulière du désorbeur à présent décrite. Le désorbeur **50** comprend :
▪ une première partie en couplage thermique avec le chauffe-eau solaire, dans laquelle circule la solution d'absorbant et de fluide frigorigène en provenance de l'absorbeur **42,** ladite solution étant réchauffée par l'énergie solaire reçue par le capteur solaire du chauffe-eau. Cette première partie est uniquement en couplage thermique avec le chauffe-eau, les circuits de circulation de fluide dans la machine à absorption étant distincts des circuits de circulation de fluide dans le chauffe-eau afin d'éviter tout mélange entre les deux types de fluide ;
▪ une seconde partie, raccordée à la première partie, et recevant la solution chauffée pour la séparer.

Dans le premier mode de réalisation, la première partie du désorbeur **50** comporte un conduit étanche **58,** dont une portion, avantageusement sous la forme d'un serpentin, est logée dans le ballon de stockage **20** de manière à plonger dans le liquide chauffé contenu dans celui-ci. L'entrée et la sortie du conduit **58** sont respectivement raccordées à la sortie de la pompe **50,** et à la deuxième partie du désorbeur **50.** Le ballon de stockage **20** ne comportant pas l'eau sanitaire, mais une eau dite « technique », ou « morte », servant à emmagasiner les calories en provenance du capteur solaire **16,** le conduit **58** est avantageusement un tube à paroi dite « simple peau », ce qui permet de réduire les coûts.

La seconde partie du désorbeur **50** est un sépérateur liquide/vapeur, notamment une vasque, ou bouteille, de décantation **60,** logée par exemple à proximité du ballon de stockage, notamment sous celui-ci, et au-dessus du détendeur **52.** La vasque **60** est raccordée dans sa partie basse à la sortie du conduit **58** et à l'entrée du détendeur **52,** et raccordée dans sa partie haute à l'entrée du condenseur **54.** Le volume de la vasque **60** étant supérieur à celui de la solution chauffée, le fluide frigorigène se sépare par gravité de la solution d'absorbant et de fluide frigorigène chauffée. La vasque **60** contient donc dans sa partie basse une solution concentrée en absorbant, et dans sa partie haute du fluide frigorigène gazeux.

Ainsi, la totalité de la solution en sortie de l'échangeur **58** passe dans le séparateur **60** et le séparateur ne reçoit que du liquide sous pression. La solution décantée par le séparateur **60** est ensuite distribuée uniquement entre le condensateur **54** et l'absorbeur **42.**

De manière avantageuse, le ballon **20,** l'absorbeur **42,** le condenseur **54,** les détendeurs **52, 54,** la pompe **58,** le ventilateur **45** ainsi que l'ensemble des conduits raccordant ces éléments sont logés dans un boitier **62,** comportant des grilles **64, 66** pour permettre une circulation d'air **68** au moyen du ventilateur **45.** Le boitier **62** est par exemple fixé à l'extérieur de l'habitation sur un mur vertical **70** de celle-ci. Des ouvertures sont par exemple ménagées dans le mur **70** pour raccorder l'évaporateur **34** aux autres éléments de la machine à absorption **14.**

Il a été décrit un dissipateur de chaleur pour refroidir l'absorbeur et le condenseur est de type air/liquide comportant un ventilateur. En variante, les dissipateurs sont des échangeurs de type liquide/liquide couplés à un dissipateur de type liquide/air, comme par exemple un dispositif à aéro-réfrigérant (« *drycooler* ») ou un ventilo-convecteur. Le dissipateur à base de ventilateur permet cependant de réduire le nombre de composants et d'éviter la présence de systèmes auxiliaires supplémentaires, ce qui réduit le coût de fabrication et d'installation.

Il a été décrit un mode de réalisation dans lequel la première partie du désorbeur **50** de la machine à absorption **14** comporte un conduit logé dans le ballon **20.** La constitution de cette première partie peut varier notamment en fonction du type de capteur solaire et du degré de sécurité exigé pour éviter le mélange accidentel de l'eau sanitaire et des fluides de la machine à absorption.

L'avantage du mode de réalisation venant d'être décrit est notamment qu'il peut utiliser n'importe quel type de capteur solaire.

Un deuxième mode de réalisation, décrit en relation avec la figure 2, diffère du premier mode de réalisation en ce que la portion du conduit **58** logée dans le ballon **20** est un tube à paroi dite « double peau », renforçant de ce fait la solidité du tube afin de préserver l'intégrité du liquide caloporteur dans le ballon **20** en cas de rupture. Grâce à ce type de protection, il est ainsi possible, mais non obligatoire, d'utiliser un ballon de stockage qui contient directement l'eau sanitaire à chauffer, les conduits de distribution **26, 28** débouchant directement dans le ballon **20.** Le capteur solaire **16** peut quant à lui adopter n'importe qu'elle forme.

Un troisième mode de réalisation, décrit en relation avec les figures 3a et 3b, diffère du premier mode en ce qu'il comporte un capteur solaire tel que décrit en relation avec le second mode de réalisation, à la différence de la portion de tube **78** de celui-ci. Plus particulièrement, comme cela est illustré au sein de la vue en coupe de la figure 4b, la portion **78** du capteur solaire **16** logée dans le ballon **20** est constituée d'un tube externe coaxial avec le tube **58** du désorbeur **50** logé dans le ballon **20.** La solution d'absorbant et de fluide frigorigène de la machine à absorption **14** circule donc dans le tube **58,** alors que le fluide caloporteur du capteur solaire **16** circule entre le tube interne **58** et le tube externe **78.** Ainsi, en cas de rupture du tube **58,** la solution d'absorbant et de fluide frigorigène se mélange au fluide caloporteur du capteur solaire mais ne se déverse pas dans le ballon **20.** Il est ainsi possible, mais non obligatoire, d'utiliser un ballon de stockage qui contient directement l'eau sanitaire à chauffer, les conduits de distribution **26, 28** débouchant directement dans le ballon **20.** Pour augmenter encore la sécurité, le tube **58** est avantageusement un tube à paroi double peau.

Il va à présent être décrit, en relation avec la figure 7, un système de commande **100** du système **10** de production de chauffage et de refroidissement selon l'invention.

Le système de commande comporte :
▪ un capteur de température **102** pour mesurer la température extérieure, par exemple logé dans le boitier externe **62** pour mesurer la température à l'ombre et à l'abri du vent ;
▪ un capteur de température **104** logé dans le ballon de stockage **20** pour mesurer la température du liquide contenu dans celui-ci;
▪ un capteur de température **106** pour mesurer la température de la pièce **40** rafraichie par la machine à absorption **14 ;**
▪ de manière optionnelle, un débitmètre **108** pour mesurer le volume en eau sanitaire chauffée demandée par les utilisateurs de l'habitation, par exemple agencé dans le conduit **26** d'amenée d'eau froide vers le ballon de stockage **20;**
▪ de manière optionnelle, un programmateur **108** pour permettre à l'utilisateur de définir des plages horaires de fonctionnement de la machine à absorption **14,** et donc de climatisation de la pièce **40,** le programmateur comportant une horloge indiquant l'heure ;
▪ une unité de commande **110,** par exemple un contrôleur, connecté aux capteurs de température **102, 104, 106,** et le cas échéant au débitmètre **108** et au programmateur **110** pour recevoir de ceux-ci les mesures de température, de débit et les plages horaires programmées, et connecté à la pompe pilotable **50,** et aux ventilateurs pilotables **43, 45** pour commander ceux-ci, et donc le fonctionnement de la machine à absorption **14,** en fonction des données que l'unité de commande reçoit.

Plus particulièrement, le système de commande **100** met en oeuvre un procédé de commande de la machine à absorption **14** qui optimise la valorisation de l'énergie solaire reçu par le capteur solaire **16** du chauffe-eau **12,** tout en maintenant la performance de la production d'eau chaude à un niveau constant. La figure 6 illustre un exemple de réalisation d'un cycle de commande du procédé mis en oeuvre par le système **100.**

Le cycle de commande débute par la réception, en **120,** par l'unité de commande **110** des valeurs courantes des températures, du débit, de la plage horaire programmée et de l'heure délivrées par les éléments **102, 104, 106, 108, 110.** De manière avantageuse, l'unité **110** moyenne les températures mesurées sur une durée donnée.

Dans une étape **122** suivante, un test est mis en oeuvre par l'unité **110** en fonction des données reçues, le cas échéant moyennées, pour savoir si une condition prédéterminée pour la production de froid par la machine à absorption **14** est satisfaite. Par exemple, une production de froid est requise si la température extérieure moyenne est supérieure à 25°C, avantageusement avec une hystérésis, et si l'heure courante est dans une plage horaire programmée prédéterminée, par exemple la plage 10h-18h.

Si le résultat du test **122** est négatif, un nouveau test est mis en oeuvre par l'unité **110,** en **124,** pour savoir si la machine à absorption **14** est en marche. Si tel est le cas, l'unité **110** éteint, en **126,** la machine **14** en désactivant la pompe **50** et les ventilateurs **44, 45,** et le procédé reboucle sur l'étape **120** pour un nouveau cycle de commande. De même, si la machine **14** est éteinte, le procédé reboucle sur l'étape **120.**

Si le résultat du test **122** est positif, c'est-à-dire qu'une production de froid est requise, l'unité **110** met en oeuvre un test, en **128,** pour savoir si la production de froid par la machine à absorption **14** n'impacte pas de manière négative la production d'eau chaude sanitaire par le chauffe-eau **12,** c'est-à-dire s'il existe un surplus d'énergie solaire captée par le capteur solaire **16** qui peut être valorisée en production de froid, évitant ainsi la surchauffe du capteur **16.** Notamment, la température dans le ballon **20** est représentative de celle du capteur solaire **16.** En autorisant le fonctionnement de la machine à absorption **14** pour une température dans le ballon **20** supérieure à une température de seuil prédéterminée pour laquelle il est considéré que l'eau sanitaire est suffisamment chaude. Les calories supplémentaires captées par le capteur **16** sont donc utilisées pour chauffer la solution d'absorbant et de fluide frigorigène dans le désorbeur **50** de la machine **14,** ce qui permet donc de rafraîchir la pièce **40** par exemple sans impacter négativement la production d'eau chaude, mais également d'éviter ainsi la surchauffe du capteur **16.**

Avantageusement, le test **128** consiste à comparer la température moyenne dans le ballon **20** à une hystérésis prédéterminée, par exemple une hystérésis de 75°C, -10°C, +5°C telles qu'illustrée à la figure 7.

Si le résultat du test **128** est positif, l'unité **110** teste en **130** si la machine **14** est déjà en marche. Si tel n'est pas le cas ; elle est mise en marche, en **132,** en activant les ventilateurs **43, 45** et la pompe **50,** et l'étape **132** reboucle sur l'étape **120,** et si tel est le cas, l'unité **110** la laisse en marche, en procédant au bouclage du test **130** sur l'étape **120** pour un nouveau cycle de commande.

L'application du système selon l'invention à la production d'eau chaude et à la climatisation d'habitation est particulièrement bien adaptée aux zones géographiques ayant des périodes de l'année particulièrement chaudes et de préférence sans gel.

Pour illustrer ceci, il est considéré un chauffe-eau solaire installé sur une habitation de l'île de la Réunion, comprenant des capteurs solaires inclinés à 20° par rapport à l'horizontale et exposés au nord, ayant une surface de capteur solaire de 4 m² et un ballon de stockage de 280 litres, et des besoins en eau-chaude sanitaire d'une famille témoin de six personnes utilisant chacune 40 litres d'eau chaude sanitaire à 45°C par jour. La surchauffe du capteur solaire est définie par une température moyenne du ballon de stockage supérieure à 110°C.

La figure 8 illustre pour un chauffe-eau solaire de ce type, en outre dépourvu de toute mesure particulière de prévention de la surchauffe du capteur solaire, le taux de couverture en pourcentage du chauffe-eau solaire (histogramme de gauche), c'est-à-dire le pourcentage de temps pendant lequel le chauffe-eau solaire suffit à produire la totalité de l'eau chaude sanitaire de la famille témoin, le taux de surchauffe (histogramme de droite), c'est-à-dire le pourcentage de temps pendant lequel le capteur solaire est estimé en surchauffe, et la demande en climatisation de l'habitation (courbe en noir). On remarque ainsi que le taux de surchauffe en période de fort ensoleillement est non négligeable, pouvant même atteindre 40% du temps, et que parallèlement les périodes de surchauffe correspondent logiquement aux périodes pendant lesquelles il existe un besoin en climatisation.

Grâce à l'invention, il est possible de remplir sensiblement à la fois le besoin d'eau chaude sanitaire et le besoin de climatisation à l'aide de la seule énergie solaire en n'utilisant qu'un seul et même capteur solaire, à savoir celui du chauffe-eau.

La figure 9 illustre les rendements moyens sur une année de stockage du seul chauffe-eau solaire individuel (« CESI »), et d'un système selon l'invention comprenant le chauffe-eau solaire individuel en coopération avec une machine à absorption (« CCESI ») d'une puissance allant de 0,5kW à 5kW par pas de 0,5kW, commandée selon le procédé décrit précédemment. Comme cela est connu, le rendement de stockage est le rapport entre la quantité d'énergie puisée dans le ballon de stockage **20,** et par conséquent la quantité d'énergie puisée pour chauffer l'eau sanitaire, et le cas échéant pour faire fonctionner la machine à absorption, et la quantité d'énergie apportée au ballon **20,** c'est-à-dire la quantité d'énergie apportée par le capteur solaire **16.**

Comme on peut le noter, le rendement de stockage du chauffe-eau seul est égal à 0,46, et donc très faible. En revanche, le rendement de stockage d'un système selon l'invention est compris entre 0,6 et 0,74, soit un gain compris entre 30% et 60% par rapport au chauffe-eau seul, et optimal pour une machine à absorption de puissance particulière, à savoir la machine à absorption de puissance 1,5 kW dans ce cas d'application.

La figure 10 illustre la température moyenne annuelle du ballon de stockage, le temps de surchauffe du capteur solaire et le temps de fonctionnement de la machine à absorption pour le chauffe-eau solaire individuel seul (« CESI ») et les systèmes selon l'invention décrits ci-dessus (« CCESI »).

Comme on peut aisément le constater, le temps de surchauffe du capteur solaire dans un système selon l'invention est sensiblement réduit, d'un pourcentage compris entre 64% et 74%, sans que cela impacte la production d'eau chaude sanitaire puisque la température du ballon est sensiblement égale à 75°C, c'est-à-dire le niveau de température prescrit pour couvrir le besoin en eau-chaude sanitaire. On remarque également que le temps de fonctionnement de la machine à absorption diminue logiquement avec la puissance de celle-ci. Une machine de 1,5 kW est cependant suffisante dans la mesure où son temps de fonctionnement correspond à un fonctionnement moyen journalier de 3,5 h pendant une période de 6 mois.

La figure 11 illustre les bilans énergétiques du chauffe-eau seul (« CESI ») et d'un système selon l'invention avec une machine à absorption de 1,5 kW tel que décrit ci-dessus (« CCESI 1,5 kW »). On note ainsi que la quantité d'énergie valorisée Q4+Q6 par le système selon l'invention, égale à 2875 kWh, est sensiblement supérieure à celle du chauffe-eau seul égale à 1604 kWh, soit un gain de 79%. De plus, les pertes du stockage Qloss_sc, sont également sensiblement réduites, celles du chauffe-eau seul étant égales à 1979 kWh et celles du système selon l'invention étant égales à 1034 kWh, soit une réduction de 45%. Enfin, la quantité d'énergie d'appoint Q2 utilisée pour satisfaire le besoin en eau-chaude sanitaire lors des faibles périodes d'ensoleillement reste inchangée à 40 kWh.

Il a été décrit un système de production d'eau chaude et de rafraichissement, ou climatisation, d'une pièce d'une habitation.

L'invention s'applique cependant à tout type de production d'eau chaude, par exemple de l'eau chaude pour un système de chauffage, et plus généralement au chauffage de tout type de liquide. De même, l'invention s'applique à tout type de production de froid, par exemple la production de froid pour des caves, des garde-mangers, etc...

## Revendications

1. Système de chauffage et de rafraîchissement par énergie solaire, comportant :
▪ un chauffe-eau solaire (12) comprenant :
∘ un capteur solaire (16) ; et
∘ un moyen de stockage (20) en couplage thermique avec le capteur solaire (16) pour transférer de l'énergie solaire captée par le capteur solaire (16) à un liquide présent dans le moyen de stockage (20);
▪ une machine à absorption (14) comprenant :
∘ un évaporateur (34) contenant un fluide frigorigène et apte à être en couplage thermique avec une première source chaude (40) pour refroidir celle-ci ;
o un absorbeur (42), en communication avec l'évaporateur (34) pour recevoir de celui-ci du fluide frigorigène, et pour refroidir le fluide frigorigène reçu en absorbant celui-ci dans une solution contenant un absorbant, de sorte à former une solution d'absorbant enrichie en fluide frigorigène ;
o un désorbeur (50), apte à être en couplage thermique avec une seconde source chaude (16, 20), le désorbeur (50) étant en communication avec l'absorbeur (42) pour recevoir de celui-ci de la solution d'absorbant enrichie en fluide frigorigène, et pour séparer ladite solution en désorbant du fluide frigorigène au moyen de la seconde source chaude, et en communication avec l'absorbeur (42) pour fournir à celui-ci une solution d'absorbant appauvrie en fluide frigorigène; et
o un condenseur (54) apte à être en couplage thermique avec une source froide (45), le condenseur étant en communication avec le désorbeur (50) pour recevoir de celui-ci du fluide frigorigène désorbé, et pour condenser le fluide frigorigène reçu au moyen de la source froide (50), et en communication avec l'évaporateur (34) pour fournir à celui-ci du fluide frigorigène condensé;
le désorbeur (50) comprenant:
▪ un échangeur (58) en communication avec l'absorbeur (42) pour recevoir de celui-ci de la solution d'absorbant enrichie en fluide frigorigène, l'échangeur (58) étant logé dans le moyen de stockage (20), ledit moyen de stockage (20) formant la seconde source chaude ;
**caractérisé en ce que** le moyen de stockage (20) est un ballon de stockage et que le désorbeur (50) comprend:
▪ un séparateur liquide/vapeur (60) en communication :
∘ avec l'échangeur (58) pour recevoir de celui-ci la solution d'absorbant enrichie en fluide frigorigène chauffée dans l'échangeur, et pour décanter ladite solution enrichie entre d'une part une solution d'absorbant appauvrie en fluide frigorigène et d'autre part du fluide frigorigène ;
∘ avec l'absorbeur (42) pour fournir à celui-ci de la solution d'absorbant appauvrie en fluide frigorigène; et
∘ avec le condenseur (54) pour fournir à celui-ci du fluide frigorigène.

2. Système de chauffage et de rafraîchissement par énergie solaire selon la revendication 1, ***caractérisé* en ce que** l'échangeur (58) comprend un conduit logé dans le ballon de stockage (20) du chauffe-eau (12) et dans lequel circule de la solution d'absorbant enrichie en fluide frigorigène.

3. Système de chauffage et de rafraichissement par énergie solaire selon la revendication 2, ***caractérisé* en ce que** le chauffe-eau (12) comporte des conduits (74) pour la circulation de fluide entre le capteur solaire et le ballon de stockage (20), et des conduits (22) pour la circulation entre le ballon de stockage (20) et un circuit de distribution d'eau sanitaire (24), et **en ce que** ledit conduit (58) de l'échangeur est séparé desdits conduits (22, 74) du chauffe-eau.

4. Système de chauffage et de rafraichissement par énergie solaire selon la revendication 2, ***caractérisé :***
• **en ce que** le capteur solaire (12) comporte un conduit (74) formant un circuit fermé dans lequel circule un fluide caloporteur, une portion (78) du conduit (74) du capteur solaire (16) étant logée dans le ballon de stockage (20),
• **en ce que** le conduit (58) de l'échangeur logé dans le ballon de stockage (20) est constitué d'un tube,
• et **en ce que** la portion (78) du conduit (74) du capteur solaire (46) logée dans le ballon de stockage (20) est constituée d'un tube externe coaxial au tube (58) de l'échangeur logé dans le ballon de stockage (20).

5. Système de chauffage et de refroidissement par énergie solaire selon l'une des revendications 2 à 4, ***caractérisé* en ce que** le conduit (58) de l'échangeur est un tube à paroi double peau.

6. Système de chauffage et de rafraîchissement par énergie solaire selon l'une quelconque des revendications précédentes, ***caractérisé* en ce que** la machine à absorption (14) comprend une pompe (50) en communication avec l'absorbeur (42) et l'échangeur (58) pour pomper de la solution d'absorbant enrichie en fluide frigorigène dans l'absorbeur et fournir la solution pompée à l'échangeur (58).

7. Système de chauffage et de rafraichissement par énergie solaire selon l'une quelconque des revendications précédentes, ***caractérisé* en ce que** le séparateur liquide/vapeur (60) comprend une entrée raccordée à l'absorbeur (42) et deux sorties, respectivement raccordées au condenseur (54) et à l'échangeur (58), la sortie raccordée au condenseur (54) étant disposée au-dessus de la sortie raccordée à l'échangeur (58).

8. Système de chauffage et de rafraîchissement par énergie solaire selon l'une quelconque des revendications précédentes, ***caractérisé* en ce que** la machine à absorption (14) comprend un détendeur (52) entre le séparateur liquide/vapeur (60) et l'absorbeur (42).

9. Système de chauffage et de rafraîchissement par énergie solaire selon l'une quelconque des revendications précédentes, ***caractérisé* en ce qu'**il comprend des moyens de commande (100) de la machine à absorption (14) comportant un capteur de température (104) pour mesurer la température à l'intérieur du ballon de stockage (20) et une unité de commande (110) de la machine à absorption (14), raccordées audit capteur (104), l'unité de commande (110) activant la machine à absorption uniquement si la température dans le ballon de stockage (20) est supérieure à une température de seuil prédéterminée, en particulier une température de 75 °C.

## Patentansprüche

1. Heiz- und Kühlanlage durch Solarenergie, umfassend:
▪ einen Solar-Boiler (12), umfassend:
∘ einen Sonnenkollektor (16); und
∘ einen Speicher (20), in thermischer Verbindung mit dem Sonnenkollektor (16) zur Übertragung der vom Sonnenkollektor (16) aufgefangenen Sonnenenergie in eine Flüssigkeit, die sich im Speicher (20) befindet;
▪ eine Absorptionsmaschine (14), umfassend:
∘ einen Verdampfer (34), der ein Kältemittel enthält und der an eine erste Wärmequelle (40) thermisch gekoppelt werden kann, um diese zu kühlen;
∘ einen Absorber (42), verbunden mit dem Verdampfer (34), um von diesem Kältemittel zu empfangen und um das empfangene Kältemittel zu kühlen, indem dieses in einer Lösung mit einem Absorber absorbiert wird, so dass eine mit Kältemittel angereicherte Absorberlösung gebildet wird;
∘ einen Desorber (50), der an eine zweite Wärmequelle (16, 20) thermisch gekoppelt werden kann, wobei der Desorber (50) in Verbindung mit dem Absorber (42) steht, um von diesem die mit Kältemittel angereicherte Absorberlösung in Empfang zu nehmen und diese Lösung zu trennen, indem das Kältemittel mit einer zweiten Wärmequelle desorbiert wird, und wobei er in Verbindung mit dem Absorber (42) steht, um an diesen eine kältemittelreduzierte Absorberlösung zu liefern; und
∘ einen Kondensator (54), der an eine Kältequelle (45) thermisch gekoppelt werden kann, wobei der Kondensator in Verbindung mit dem Desorber (50) steht, um von diesem das desorbierte Kältemittel zu empfangen und um das empfangene Kältemittel mittels der Kältequelle (50) zu kondensieren, und wobei er in Verbindung mit dem Verdampfer (34) steht, um das kondensierte Kältemittel an diesen zu liefern;
▪ wobei der Desorber (50) umfasst:
∘ einen Wärmetauscher (58), der in Verbindung mit dem Absorber (42) steht, um von diesem die mit Kältemittel angereicherte Absorberlösung zu empfangen, wobei der Wärmetauscher (58) dabei im Speicher (20) untergebracht ist, wobei dieser Speicher (20) die zweite Wärmequelle bildet;
**dadurch gekennzeichnet, dass** es sich beim Speicher (20) um einen Speichertank handelt und dass der Desorber (50) umfasst:
▪ einen Flüssigkeits-/ Dampfabscheider (60), in Verbindung mit:
∘ dem Wärmetauscher (58), um von diesem die mit Kältemittel angereicherte, im Wärmetauscher erwärmte Absorberlösung in Empfang zu nehmen und um die genannte angereicherte Lösung in einerseits eine kältemittelreduzierte Lösung und andererseits ein Kältemittel zu trennen;
∘ mit dem Absorber (42), um die genannte kältemittelreduzierte Lösung zu liefern; und
∘ dem Kondensator (54), um diesem das Kältemittel zu liefern.

2. Heiz- und Kühlanlage durch Solarenergie gemäß Anspruch 1, ***dadurch gekennzeichnet, dass*** der Wärmetauscher (58) eine im Speichertank (20) des Boilers (12) untergebrachte Leitung umfasst, in der die mit Kältemittel angereicherte Lösung zirkuliert.

3. Heiz- und Kühlanlage durch Solarenergie gemäß Anspruch 2, ***dadurch gekennzeichnet, dass*** der Boiler (12) Leitungen (74) zur Zirkulation des Mittels zwischen dem Sonnenkollektor und dem Speichertank (20), sowie Leitungen (22) für die Zirkulation zwischen dem Speichertank (20) und einem Sanitärwassersystem (24) enthält, und dass diese Leitung (58) des Wärmetauschers von den genannten Leitungen (22, 74) des Boilers getrennt ist.

4. Heiz- und Kühlanlage durch Solarenergie gemäß Anspruch 2, ***dadurch gekennzeichnet, dass :***
• der Sonnenkollektor (12) eine Leitung (74) enthält, die einen geschlossenen Kreislauf bildet und in der eine Wärmeübertragungsflüssigkeit zirkuliert, wobei ein Teilstück (78) der Leitung (74) des Sonnenkollektors (16) im Speichertank (20) untergebracht ist,
• und dass die Leitung (58) des Wärmetauschers, die im Speichertank (20) untergebracht ist, aus einem Schlauch besteht,
• und dass das Teilstück (78) der Leitung (74) des Sonnenkollektors (46), das im Speichertank (20) untergebracht ist, aus einem zum Rohr (58) des im Speichertank (20) untergebrachten Wärmetauschers externen, koaxialen Rohr besteht.

5. Heiz- und Kühlanlage durch Solarenergie gemäß einem der Ansprüche 2 bis 4, ***dadurch gekennzeichnet, dass*** es sich bei der Leitung (58) des Wärmetauschers um ein Rohr mit einer doppelschichtigen Wand handelt.

6. Heiz- und Kühlanlage durch Solarenergie, gemäß einem der vorangehenden Ansprüche, ***dadurch gekennzeichnet, dass*** die Absorptionsmaschine (14) eine Pumpe (50) umfasst, die in Verbindung mit dem Absorber (42) und dem Wärmetauscher (58) steht, um die mit Kältemittel angereicherte Absorberlösung in den Absorber zu pumpen und die gepumpte Lösung an den Wärmetauscher (58) zu liefern.

7. Heiz- und Kühlanlage durch Solarenergie, gemäß einem der vorangehenden Ansprüche, ***dadurch gekennzeichnet, dass*** der Flüssigkeits-/ Dampfabscheider (60) einen Eingang, der mit dem Absorber (42) verbunden ist, sowie zwei Ausgänge umfasst, die jeweils mit dem Kondensator (54) und dem Wärmetauscher (58) verbunden sind, wobei der an den Kondensator (54) angeschlossene Ausgang über dem mit dem Wärmetauscher (58) angeschlossenen Ausgang angeordnet ist.

8. Heiz- und Kühlanlage durch Solarenergie gemäß einem der vorangehenden Ansprüche, ***dadurch gekennzeichnet, dass*** die Absorptionsmaschine (14) einen Druckminderer (52) zwischen dem Flüssigkeits-/ Dampfabscheider (60) und dem Absorber (42) umfasst.

9. Heiz- und Kühlanlage durch Solarenergie, gemäß einem der vorangehenden Ansprüche, ***dadurch gekennzeichnet, dass*** es Steuervorrichtungen (100) für die Absorptionsmaschine (14) umfasst, die einen Temperaturfühler (104) zur Messung der Temperatur im Inneren des Lagerbehälters (20) und eine Steuereinheit (110) der Absorptionsmaschine (14) enthalten, die an diesem Fühler (104) angeschlossen sind, wobei die Steuereinheit (110) die Absorptionsmaschine nur aktiviert, wenn die Temperatur im Lagerbehälter (20) höher liegt, als eine vorher festgelegte Grenztemperatur, insbesondere eine Temperatur von 75 °C.

## Claims

1. A heating and cooling system using solar energy, comprising:
▪ a solar water heater (12) comprising:
∘ a solar collector (16); and
∘ a storage mean (20) thermally coupled with the solar collector (16) to transfer solar energy collected by the solar collector (16) to a liquid present in the storage mean (20);
▪ an absorption chiller (14) comprising:
∘ an evaporator (34) containing a refrigerant and capable of being thermally coupled with a first hot source (40) to cool the latter;
∘ an absorber (42), in communication with the evaporator (34) to receive refrigerant therefrom and to cool the received refrigerant by absorbing it in a solution containing an absorbent, to form a refrigerant-enriched absorbent solution;
∘ a desorber (50), capable of being thermally coupled with a second hot source (16, 20), the desorber (50) being in communication with the absorber (42) to receive refrigerant-enriched absorbent solution therefrom, and to separate said solution by desorbing refrigerant by means of the second hot source, and in communication with the absorber (42) to supply it with a solution of refrigerant-depleted absorbent; and
∘ a condenser (54) capable of being thermally coupled with a cold source (45), the condenser being in communication with the desorber (50) to receive desorbed refrigerant therefrom and to condensate the received refrigerant by means of the cold source (50), and in communication with the evaporator (34) to supply it with condensed refrigerant;
the desorber (50) comprising an exchanger (58) in communication with the absorber (42) to receive refrigerant-enriched absorbent solution therefrom, the exchanger (58) being housed in the storage mean (20), said storage mean (20) forming the second hot source;
***characterized* in that** the storage mean (20) is a storage tank and **in that** the disrober (50) comprises a liquid/vapor separator (60) in communication:
▪ with the exchanger (58) to receive therefrom the refrigerant-enriched absorbent solution heated in the exchanger, and to decant said enriched solution between, on the one hand, a refrigerant-depleted absorbent solution and, on the other hand, refrigerant;
▪ with the absorber (42) to supply it with the refrigerant-depleted absorbent solution; and
▪ with the condenser (54) to supply it with refrigerant.

2. The heating and cooling system using solar energy of claim 1, ***characterized* in that** the exchanger (58) comprises a duct housed in the storage tank (20) of the water heater (12) and having the refrigerant-enriched absorbent solution flowing therethrough.

3. The heating and cooling system using solar energy of claim 2, ***characterized* in that** the water heater (12) comprises ducts (74) for the circulation of fluid between the solar collector and the storage tank (20), and ducts (22) for the circulation between the storage tank (20) and a domestic water distribution circuit (24), and **in that** said duct (58) of the exchanger is separated from said ducts (22, 74) of the water heater.

4. The heating and cooling system using solar energy of claim 2, ***characterized:***
• **in that** the solar collector (12) comprises a duct (74) forming a closed circuit having a heat-carrying fluid flowing therethrough, a portion (78) of the duct (74) of the solar collector (16) being housed in the storage tank (20),
• **in that** the duct (58) of the exchanger housed in the storage tank (20) is formed of a tube,
• and **in that** the portion (78) of the duct (74) of the solar collector (46) housed in the storage tank (20) is formed of an outer tube coaxial to the tube (58) of the exchanger housed in the storage tank (20).

5. The heating and cooling system using solar energy of any of claims 2 to 4, ***characterized* in that** the duct (58) of the exchanger is a tube having a double-skin wall.

6. The heating and cooling system using solar energy of any of the foregoing claims, ***characterized* in that** the absorption chiller (14) comprises a pump (50) in communication with the absorber (42) and the exchanger (58) to pump the absorbent solution enriched with refrigerant into the absorber and supply the pumped solution to the exchanger (58).

7. The heating and cooling system using solar energy of any of the foregoing claims, ***characterized* in that** the liquid/vapor separator (60) comprises an inlet connected to the absorber (42) and two outlets, respectively connected to the condenser (54) and to the exchanger (58), the outlet connected to the condenser (54) being arranged above the outlet connected to the exchanger (58).

8. The heating and cooling system using solar energy of any of the foregoing claims, ***characterized* in that** the absorption chiller (14) comprises an expansion valve (52) between the liquid/vapor separator (60) and the absorber (42).

9. The heating and cooling system using solar energy of any of the foregoing claims, ***characterized* in that** it comprises means (100) for controlling the absorption chiller (14) comprising a temperature sensor (104) for measuring the temperature inside of the storage tank (20) and a unit (110) for controlling the absorption chiller (14), connected to said sensor (104), the control unit (110) activating the absorption chiller only if the temperature in the storage tank (20) is higher than a predetermined threshold temperature, particularly a 75°C temperature.
